# EUROPÄISCHE PATENTSCHRIFT

(11) **EP 1 925 828 B1**
(45) Veröffentlichungstag und Bekanntmachung des Hinweises auf die Patenterteilung: **26.05.2010**
(21) Anmeldenummer: 07022295.5
(22) Anmeldetag: 16.11.2007
(51) Int. Cl.: F16B 25/10, F16B 33/02

(54) **Schraube**
Screw
Vis

(30) Priorität: 22.11.2006 DE 102006057259
(43) Veröffentlichungstag der Anmeldung: 28.05.2008
(73) Patentinhaber: SWG Schraubenwerk Gaisbach GmbH, 74638 Waldenburg (DE); Adolf Würth GmbH & Co. KG, 74653 Künzelsau (DE)
(72) Erfinder: Stiebitz, Günter, 74638 Waldenburg (DE); Wolfarth, Uwe, 74575 Schrozberg (DE)
(74) Vertreter: Patentanwälte Ruff, Wilhelm, Beier, Dauster & Partner

(56) Entgegenhaltungen:
- EP-A- 0 541 803
- EP-A- 0 939 235
- DE-U1- 29 513 571
- JP-A- 6 193 621
- US-A- 2 263 137
- US-A- 5 273 383

## Beschreibung

Die Erfindung geht aus von einer Schraube, insbesondere einer selbstbohrenden Schraube.

Es ist bekannt, dass man zum Erleichtern des Einschraubens von Schrauben in Holz oder holzähnliches Material an den Bohrspitzen der Schrauben Fräsrippen anbringt, die in der Regel in Längsrichtung verlaufen, also quer zur Bewegung der Schraubenspitze gegenüber dem Holz. Diese Fräsrippen sind auch dazu gedacht, die Gefahr von Spaltrissen oder Aussplittern zu verringern.

Das Dokument US 2 263 137 offenbart eine Schraube mit den Merkmalen des Oberbegriffs des Anspruchs 1.

Bei einer bekannten Schraube dieser Art (DE 19525732) liegen die Fräsrippen bei einer kegelförmigen Schraubenspitze in einer Erzeugenden der Kegelform, anders ausgedrückt verlaufen sie in einer die Längsachse der Schraube enthaltenden Längsmittelebene.

Ebenfalls bekannt ist eine Schraube (EP 939235 A), bei der mehrere Fräsrippen schräg verlaufen, und zwar unter einem Neigungswinkel gegenüber der Längsachse in einem Bereich von etwa 15°.

Der Erfindung liegt die Aufgabe zu Grunde, eine Schraube, insbesondere eine selbstbohrende Schraube, mit verbesserten Einschraubeigenschaften insbesondere im Hinblick auf das Spalten von Holz zu schaffen.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Das gegenläufige Gewinde, das sich nur über einen Teil des Gewindes erstreckt, bildet eine besonders günstige Möglichkeit, beim Herstellen des Lochs, in das die Schraube dann eingeschraubt wird, eine Spaltwirkung zu verhindern, so dass die Schraube auch im Randbereich von Hölzern eingesetzt werden kann, ohne dass die Gefahr besteht, dass dort die Faser des Holzes aufreißt und sich die Schraube damit dann nicht mehr sorgfältig festschrauben lässt.

Als besonders sinnvoll hat es sich herausgestellt, das Schabegewinde so auszugestalten, dass es sich über zwei bis drei Windungen erstreckt, so dass auf diese Weise auch bei dem Schabegewinde eine allenfalls durch das Schraubgewinde unterbrochene kontinuierliche Schabekante über zwei bis drei Umdrehungen entsteht.

Die Gewindehöhe des Schabegewindes kann in. Weiterbildung der Erfindung so gewählt werden, dass sie zwischen 0,2 mm und maximal der Gewindehöhe des Schraubgewindes liegt.

Aus dem Anspruch 1 ergibt sich, dass das Schabegewinde nicht direkt an dem vorderen spitzen Ende der Schraubenspitze beginnt. Es ist also dafür gesorgt, dass zunächst das bis zu dem vorderen Ende reichende Schraubgewinde in das Holz eingreift, um den Vorschub zu erzeugen. Erfindungsgemäß kann vorgesehen sein, dass die Gewindehöhe des Schabegewindes von seinem der Schraubenspitze zugeordneten vorderen Bereich bis zu seinem Ende konstant bleibt. Dies gilt insbesondere dann, wenn die Gewindehöhe des Schabegewindes kleiner ist als die Gewindehöhe des Schraubgewindes.

Es ist aber ebenfalls möglich und liegt im Rahmen der Erfindung, dass die Gewindehöhe des Schabegewindes von seinem der Schraubenspitze zugeordneten Anfang bis zu dem gegenüberliegenden Ende abnimmt, beispielsweise kontinuierlich abnimmt.

Erfindungsgemäß kann in Weiterbildung vorgesehen sein, dass die Steigung des Schabegewindes kleiner oder gleich ist als die Gewindesteigung des Schraubgewindes.

Als besonders sinnvoll hat es sich herausgestellt, die Gewindesteigung des Schabegewindes der Gewindesteigung des Schraubgewindes gleich zu machen.

Bei dem Schraubgewinde kann es sich um ein Spanplattengewinde oder auch um ein Holzgewinde handeln. Es kann eingängig oder auch mehrgängig sein. Dementsprechend kann auch das Schabegewinde eingängig oder mehrgängig sein.

Bei der Spitze der Schraube kann es sich sowohl um eine Bohrspitze handeln, also eine Kegelform der Spitze der Schraube mit bis zur Spitze geführtem Schraubgewinde. Die Erfindung ist aber auch anwendbar bei einer Schraube, die an ihrem vorderen Ende eine Schneidspitze, insbesondere eine gekniffene Schneidspitze mit Schneidkanten aufweist.

Während bei einer Bohrspitze das Schabegewinde bereits innerhalb des kegelförmigen Bereichs beginnt, beispielsweise auf halber Länge des kegelförmigen Bereichs, beginnt das Schabegewinde bei einer Schneidspitze erst nach der Schneidspitze.

Die von der Erfindung vorgeschlagene Schraube ist nicht nur für Holz oder holzähnliches Material geeignet, sondern auch für die Anwendung als Blechschraube.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht einer ersten Ausführungsform einer Schraube nach der Erfindung;
- Figur 2: eine Seitenansicht einer zweiten Ausführungsform der Erfindung.

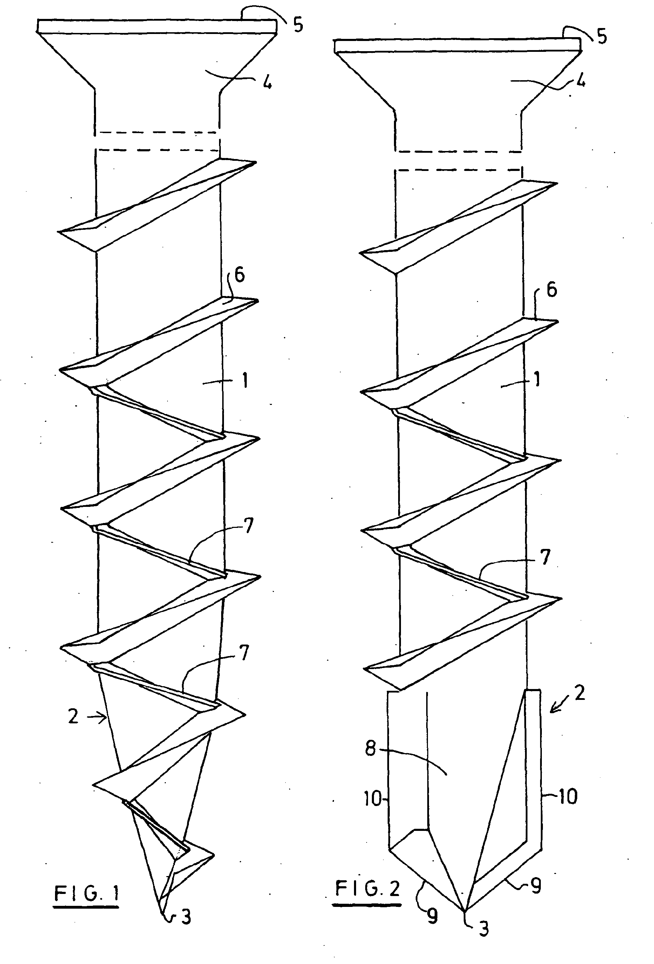

Die in Figur 1 und 2 dargestellte Schraube enthält einen zylindrischen Schraubenschaft 1, der an seinem einen in Figur 1 unteren Ende in eine Schraubenspitze 2 übergeht. Die Schraubenspitze 2 weist in der Ausführungsform der Figur 1 Kegelform mit einer scharfen Spitze 3 auf. Der Kegelwinkel beträgt etwa 30°. An dem gegenüberliegenden Ende ist ein Schraubenkopf 4 ausgebildet, im dargestellten Beispiel ein Senkkopf. Von dem freien beispielsweise ebenen Ende 5 des Senkkopfs 4 führt in diesen eine Schraubenantriebsvertiefung hinein, die dazu dient, die Schraube mit einem entsprechenden Werkzeug zu verdrehen.

An dem Schraubenschaft 1 ist ein Schraubengewinde 6 ausgebildet, das beispielsweise durch Walzen hergestellt ist. Im dargestellten Beispiel handelt es sich um ein eingängiges Gewinde. Dieses Gewinde 6 reicht bei der Ausführungsform der Figur 1 bis zu der scharfen Spitze 3 der Schraubenspitze 2.

In dem vorderen Bereich ist gleichzeitig ein gegenläufiges Gewinde 7 vorhanden, dass etwa auf halber Länge der Kegelform der Schraubenspitze 2 beginnt und sich über etwa drei Windungen erstreckt. Dieses Gewinde 7 bildet eine Gewindekante, die als Schabekante ausgebildet ist und wirkt. Man kann der Figur 1 und auch der Figur 2 entnehmen, dass dieses gegenläufige Schabegewinde die gleiche Gewindesteigung aufweist wie das Schraubgewinde 6. Seine Gewindehöhe, also der Abstand seiner Schabekante von der Oberfläche des Schraubenschafts 1, ist etwa halb so groß wie die Gewindehöhe des Schraubgewindes 6.

Bei der Ausführungsform nach Figur 2 ist die Schraubenspitze 2 als Schneidspitze 8 ausgebildet, die durch einen Kneifvorgang hergestellt wird. Sie enthält zwei vordere Schneidkanten 9, die den eigentlichen Bohrvorgang durchführen, und zwei seitliche Schneidkanten 10, die parallel zur Längsrichtung der Achse verlaufen. Auch hier ist zwischen dem Schraubgewinde 6 ein Schabegewinde 7 vorhanden, das wiederum die gleiche Steigung wie das Schraubgewinde 6 aufweist, aber eine geringere Gewindehöhe.

## Patentansprüche

1. Schraube, insbesondere selbstbohrende Schraube, mit
1.1 einem Schraubenkopf (4),
1.2 einem Schraubenschaft (1),
1.3 einer Schraubenspitze (2),
1.4 einem Schraubgewinde (6), sowie mit
1.5 einem gegenläufig zu dem Schraubgewinde (6) verlaufenden eine Schabekante aufweisenden Schabegewinde (7), das
1.6 mit einem Abstand von dem vorderen Ende (3) der Schraube beginnt,
1.7 sich nur über einen Teil des Schraubgewindes (6) erstreckt **dadurch gekennzeichnet, dass** die
1.8 Gewindesteigung des Schabegewindes (7) kleiner oder gleich der Gewindesteigung des Schraubgewindes (6) ist.

2. Schraube nach Anspruch 1, bei der das Schabegewinde (7) sich über zwei bis drei Windungen erstreckt.

3. Schraube nach Anspruch 1 oder 2, bei der die Gewindehöhe des Schabegewindes (7) in einem Bereich zwischen 0,2 mm und der Gewindehöhe des Schraubgewindes (6) liegt.

4. Schraube nach einem der vorhergehenden Ansprüche, bei der die Gewindehöhe des Schabegewindes (7) von dem vorderen Ende (3) der Schraube in Richtung auf den Schraubenkopf (4) konstant bleibt.

5. Schraube nach einem der Ansprüche 1 bis 3, bei der die Gewindehöhe des Schabegewindes von dem vorderen Ende (3) der Schraube ausgehend in Richtung auf den Schraubenkopf (4) abnimmt.

6. Schraube nach einem der vorhergehenden Ansprüche, bei der die Gewindesteigung des Schabegewindes (7) gleich der Gewindesteigung des Schraubgewindes (6) ist.

7. Schraube nach einem der vorhergehenden Ansprüche, bei der das Schraubgewinde (6) ein eingängiges Gewinde ist.

8. Schraube nach einem der Ansprüche 1 bis 6, bei der das Schraubgewinde ein mehrgängiges Gewinde ist.

9. Schraube nach einem der vorhergehenden Ansprüche, bei der das Schraubgewinde (6) ein Spanplattengewinde ist.

10. Schraube nach einem der Ansprüche 1 bis 8, bei der das Schraubgewinde (6) ein Holzgewinde ist.

11. Schraube nach einem der vorhergehenden Ansprüche, bei der die Schraubenspitze (2) eine Bohrspitze aufweist, und das Schabegewinde (7) innerhalb der Bohrspitze beginnt.

12. Schraube nach einem der Ansprüche 1 bis 10, bei der die Schraubenspitze (2) eine Schneidspitze (8) aufweist und das Schabegewinde (7) hinter der Schneidspitze (8) beginnt.

## Claims

1. Screw, in particular, a self-tapping screw comprising
1.1 a screw head (4),
1.2 a screw shaft (1),
1.3 a screw tip (2),
1.4 a screw thread (6), and
1.5 a cutting thread opposite to the screw thread (6) showing a cutting edge (7) which cutting thread
1.6 starts at a distance from the front end (3) of the screw and
1.7 only covers a part of the screw thread (6),
**characterised in that** the
1.8 thread pitch of the cutting thread (7) is less than or equal to the thread pitch of the screw thread (6).

2. Screw according to claim 1, wherein the cutting thread (7) covers two to three windings.

3. Screw according to claim 1 or 2, wherein the thread height of the cutting thread (7) is in a range between 0.2 mm and the thread height of the screw thread (6).

4. Screw according to any of the preceding claims, wherein the thread height of the cutting thread (7) remains constant from the front end (3) of the screw in the direction to the screw head (4).

5. Screw according to any of the claims 1 to 3, wherein the thread height of the cutting thread reduces starting from the front end (3) of the screw in the direction to the screw head (4).

6. Screw according to any of the preceding claims, wherein the thread pitch of the cutting thread (7) is equal to the thread pitch of the screw thread (6).

7. Screw according to any of the preceding claims, wherein the screw thread (6) is a single-thread.

8. Screw according to any of the claims 1 to 6, wherein the screw thread is a multiple-thread.

9. Screw according to any of the preceding claims, wherein the screw thread (6) is a chipboard thread.

10. Screw according to any of the claims 1 to 8, wherein the screw thread (6) is a wood thread.

11. Screw according to any of the preceding claims, wherein the screw tip (2) shows a drill tip and that the cutting thread (7) starts within the drill tip.

12. Screw according to one of the claims 1 to 10, wherein the screw tip (2) shows a cutting tip (8) and that the cutting thread (7) starts behind the cutting tip.

## Revendications

1. Vis, notamment vis autotaraudeuse, présentant
1.1 une tête (4),
1.2 une tige (1),
1.3 une pointe (2),
1.4 un filet de vissage (6) ainsi qu'un
1.5 filet taraudeur (7) dont le pas est de sens contraire à celui du filet de vissage (6) et qui présente une arête taraudeuse, lequel filet taraudeur
1.6 commence à une certaine distance de l'extrémité avant (3) de la vis,
1.7 ne s'étend que sur une partie du filet de vissage (6),
**caractérisée en ce que**
1.8 le pas de vis du filetage taraudeur (7) est inférieur ou égal au pas de vis du filet de vissage (6).

2. Vis selon la revendication 1, sur laquelle le filet taraudeur (7) s'étend sur deux à trois tours.

3. Vis selon la revendication 1 ou 2, sur laquelle la hauteur du pas du filet taraudeur (7) se situe dans une plage comprise entre 0,2 mm et la hauteur du filet de vissage (6).

4. Vis selon l'une des revendications précédentes, sur laquelle la hauteur du filet taraudeur (7) demeure constante de l'extrémité avant (3) de la vis à la tête de vis (4).

5. Vis selon l'une des revendications 1 à 3, sur laquelle la hauteur du filet taraudeur diminue lorsque observée en partant de l'extrémité avant (3) de la vis, en direction de la tête de vis (4).

6. Vis selon l'une des revendications précédentes, sur laquelle le pas du filet taraudeur (7) est identique au pas du filet de vissage (6).

7. Vis selon l'une des revendications précédentes, sur laquelle le filet de vissage (6) est un filet unique.

8. Vis selon l'une des revendications 1 à 6, sur laquelle le filet de vissage est un filet multiple.

9. Vis selon l'une des revendications précédentes, sur laquelle le filet de vissage (6) est un filet pour panneaux d'agglomérés.

10. Vis selon l'une des revendications 1 à 8, sur laquelle le filet de vissage (6) est un filet pour le bois.

11. Vis selon l'une des revendications précédentes, sur laquelle la pointe (2) de vis présente une pointe de perçage et sur laquelle le filet taraudeur (7) commence à l'intérieur de la pointe de perçage.

12. Vis selon l'une des revendications 1 à 10, sur laquelle la pointe (2) de vis présente une pointe coupante (8) et sur laquelle le filet de taraudage (7) commence après la pointe coupante (8).
